(19) Europäisches Patentamt

European Patent Office

Office européen des brevets

(11) **EP 1 672 852 A2**

(12) **EUROPEAN PATENT APPLICATION**

(43) Date of publication:
**21.06.2006 Bulletin 2006/25**

(51) Int Cl.:
***H04L 12/56*** (2006.01)

(21) Application number: **05027527.0**

(22) Date of filing: **15.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.12.2004 KR 2004106166**

(71) Applicants:
• **Samsung Electronics Co., Ltd.**
**Suwon-si, Gyeonggi-Do (KR)**
• **Seoul National University Industry Foundation**
**Seoul (KR)**

(72) Inventors:
• **Jun, Jung-Hyun**
**Gangnam-gu**
**Seoul (KR)**

• **Choi, Young-June**
**Seocho-gu**
**Seoul (KR)**
• **Bahk, Sae-Woong**
**Institute of New Media & Communic.**
**Gwanak-gu**
**Seoul (KR)**
• **Lee, Ok-Seon**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Scheduling method in a wireless network**

(57)    A method for performing scheduling on tasks formed for communication between a plurality of nodes in a wireless network having the nodes and a coordinator for coordinating communication between the nodes. Each of the nodes calculates an affinity for at least one task in which the corresponding node participates, and transmits the calculated task affinity to the coordinator. The coordinator assigns priorities to the tasks in the order of level of the task affinities received from the nodes, and transmits the assigned priorities to the nodes.

FIG.1

**EP 1 672 852 A2**

**Description**

The present invention relates generally to a scheduling method in a wireless network, and in particular, to a method and an apparatus for scheduling nodes in a wireless network supporting communication between the nodes.

With the development of the wireless communication industry, various wireless communication schemes have been proposed. As wireless network use increases, so does the demand for sharing data at any time and in any place. To provide such service, existing wireless networks, however, must have the necessary infrastructure, such as base stations or access points (AP). Therefore, to receive a desired service, nodes must be located restrictively in a place where they can access a base station or an AP.

A Time Division Multiple Access (TDMA)-based ad-hoc wireless network is a typical example of a wireless communication scheme. The ad-hoc wireless network includes an IEEE 802.11 wireless network supporting a direct link, an IEEE 802.16d wireless network supporting a mash network, and an IEEE 802.15.3 wireless network supporting wireless streaming. The 802.11 and 802.15.3 networks propose a scheme for supporting direct communication between all nodes located in a 1-hop distance, and the 802.16d network proposes a scheme for supporting direct communication between a node located inside a cell boundary and a node located outside the cell boundary.

In the ad-hoc wireless network, even though the infrastructure, such as a base station or an AP, is not installed, nodes can still use the data service autonomously. As a result, the ad-hoc wireless network communication scheme is desirable because it is an alternative and node-oriented wireless network. However, in the ad-hoc wireless network, there is no subject for managing and scheduling resources for nodes, like the base station or the AP, thus causing a reduction in resource efficiency. In the existing centralized wireless network, even the power exhaustion of nodes does not affect the wireless network. In the ad-hoc wireless network, where nodes should serve as repeaters, the performance deterioration of nodes causes performance degradation of the network. Therefore, to make the ad-hoc wireless network practical, it is necessary to increase power efficiency of nodes.

It is, therefore, the object of the present invention to provide a scheduling method for saving power of nodes in a wireless network supporting communication between the nodes.

This object is solved by the subject matter of the independent claims.

Preferred embodiments are defined in the dependent claims.

It is an aspect of the present invention to provide a scheduling method for increasing throughput and power efficiency of nodes in a wireless network supporting communication between the nodes.

It is another aspect of the present invention to provide an affinity-based scheduling method for increasing throughput and power efficiency of nodes in a wireless network supporting communication between the nodes.

It is yet another aspect of the present invention to provide a scheduling method based on affinities and the amount of resources, for increasing throughput and power efficiency of nodes in a wireless network supporting communication between the nodes.

It is still another aspect of the present invention to provide a method for measuring an affinity based on a rate at which nodes participate in communication, for scheduling in a wireless network supporting communication between the nodes.

It is still another aspect of the present invention to provide a method for independently scheduling tasks in which nodes participate through a coordinator in a wireless network supporting communication between the nodes.

It is still another aspect of the present invention to provide a method for independently scheduling tasks using node affinities and task affinities in a wireless network supporting communication between nodes.

It is still another aspect of the present invention to provide a method for acquiring an affinity of a node based on the total sum of affinities of tasks in which nodes participate in a wireless network supporting communication between the nodes.

It is still another aspect of the present invention to provide a method for acquiring a task affinity based on the sum of affinities of nodes participating in the corresponding task in a wireless network supporting communication between the nodes.

It is still another aspect of the present invention to provide a scheduling method for separately assigning priorities to tasks in the order of low task affinity in a wireless network supporting communication between nodes.

It is still another aspect of the present invention to provide a scheduling method for assigning a priority to a concerned task by a node having the lowest node affinity when there are multiple tasks having the same affinity in a wireless network supporting communication between nodes.

It is still another aspect of the present invention to provide a scheduling method for assigning a higher priority to a task having the smaller amount of required resources when there are multiple tasks having the same task affinity and the same node affinity in a wireless network supporting communication between nodes.

It is still another aspect of the present invention to provide a scheduling method for assigning priorities based on the amount of required resources, and assigning priorities to tasks having the same amount of required resources based on affinities in a wireless network supporting communication between nodes.

It is still another aspect of the present invention to provide a method for allowing a node to transition to a doze state which is a power-saving mode, when all tasks concerned by the node are completely performed in a wireless network supporting communication between nodes.

It is still another aspect of the present invention to provide a scheduling method for minimizing the number of nodes that unnecessarily dissipate power in a wireless network supporting communication between nodes.

It is still another aspect of the present invention to provide an apparatus that is adapted to operate according to the above methods.

In accordance with a first aspect of the present invention, there is provided a method for performing scheduling on tasks formed for communication between a plurality of nodes in a wireless network supporting communication between the nodes. The method includes calculating affinities for the nodes; calculating affinities for the tasks according to the calculated node affinities; and assigning priorities to the tasks in the order of level of the calculated task affinities.

In accordance with a second aspect of the present invention, there is provided a method for performing scheduling on tasks by a coordinator in a wireless network in which the tasks are formed for communication between a plurality of nodes and the nodes transmit information on the tasks. The method includes receiving information on the tasks from the nodes; calculating affinities for the nodes according to the task information; calculating affinities for the tasks according to the calculated node affinities; assigning priorities to the tasks in the order of level of the calculated task affinities; and transmitting the assigned priorities to the nodes.

In accordance with a third aspect of the present invention, there is provided a method for performing scheduling on tasks by a coordinator in a wireless network in which tasks are formed for communication between a plurality of nodes and the nodes transmit information on the tasks. The method includes receiving information on the tasks from the nodes; assigning priorities to the tasks according to their amounts of required resources, acquired from the task information; if there are tasks having the same amount of required resources, calculating affinities for nodes forming the tasks having the same amount of required resources according to the task information; calculating affinities for the tasks having the same amount of required resources according to the calculated node affinities; assigning priorities to the tasks having the same amount of required resources in the order of level of the calculated task affinities; and transmitting the priorities assigned based on the amount of required resources and the task affinities, to the nodes.

In accordance with a fourth aspect of the present invention, there is provided a method for performing scheduling on tasks formed for communication between a plurality of nodes in a wireless network having the nodes and a coordinator for coordinating communication between the nodes. The method includes calculating, by each of the nodes, an affinity for at least one task in which the corresponding node participates, and transmitting the calculated task affinity to the coordinator; assigning, by the coordinator, priorities to the tasks in the order of level of the task affinities received from the nodes; and transmitting the assigned priorities to the nodes.

The present invention will become more apparent from the following detailed description when taken in conjunction with the accompanying drawings in which:

FIG. 1 is a diagram illustrating a wireless network according to an embodiment of the present invention;

FIG. 2 is a diagram illustrating a control flow performed by a node according to a first embodiment of the present invention;

FIG. 3 is a diagram illustrating a control flow performed by a coordinator according to the first embodiment of the present invention;

FIG. 4 is a diagram illustrating an example of a control flow for a subroutine of the scheduling mode illustrated in FIG. 3;

FIG. 5 is a diagram illustrating another example of a control flow for a subroutine of the scheduling mode illustrated in FIG. 3;

FIG. 6 is a diagram illustrating a control flow performed by a node according to a second embodiment of the present invention;

FIG. 7 is a diagram illustrating a control flow performed by a coordinator according to the second embodiment of the present invention;

FIG. 8 is a diagram illustrating an example of a control flow for a subroutine of the scheduling mode illustrated in FIG. 7;

FIG. 9 is a diagram illustrating another example of a control flow for a subroutine of the scheduling mode illustrated in FIG. 7;

FIG. 10 is a diagram illustrating a relationship between the number of nodes and power consumption for transmission of unit data in a wireless network;

FIG. 11 is a diagram illustrating a relationship between power consumption and a data load in a wireless network;

FIG. 12 is a graph illustrating a comparison between throughput of an existing competition scheme and throughput of the embodiment of the present invention in a wireless network; and

FIG. 13 is a diagram illustrating a comparison between the embodiment of the present invention and an existing power-saving scheme in terms of a service acquisition rate of each node.

FIG. 14 is a diagram illustrating a performance comparison between node affinities.

Several preferred embodiments of the present invention will now be described in detail with reference to the annexed drawings. In the following description, a detailed description of known functions and configurations incorporated herein has been omitted for conciseness.

The embodiments of the present invention provide a scheduling method for separately assigning priorities to tasks formed by nodes in a wireless network supporting communication between the nodes. The priorities of the tasks are determined considering task affinities and the amount of resources required. The task affinities are determined based on affinities of nodes that form the tasks. Therefore, the embodiments of the present invention provide a method for separately calculating affinities of nodes (node affinities), and separately calculating affinities of tasks (task affinities) based on the node affinities.

To calculate node affinities and task affinities according to embodiments of the present invention, respective nodes constituting an ad-hoc wireless network should be able to share information on a specific service level to calculate node affinities using the service level information, and calculate task affinities based on the node affinities. In the following examples, it is assumed that an Ad-hoc Traffic Indication Map Message (ATIM), defined in an ad-hoc wireless network, is used. In the following description, a message transmitted for sharing the service level information will be referred to as a "resource request message." However, it would be obvious to those skilled in the art that an existing message or a newly defined message that can be shared by nodes can also be used. Herein, the message should include information on at least one task, and the amount of resources to be used by a node. The task information is used for identifying a source node and a destination node for the corresponding task. The resource amount information is indicates the size of a data packet to be transmitted/received through the corresponding task.

The embodiments of the present invention are divided according to the subject of calculating task affinities for purposes of illustration and to provide an example. In the first embodiment, the task affinities are calculated by a coordinator (CN), and in the second embodiment, the task affinities are calculated by nodes. In an alternative embodiment, node affinities are calculated by nodes, and task affinities are calculated by a CN based on the node affinities provided from the nodes.

There are two different scheduling modes performed by a CN to independently determine priorities of tasks. The first scheduling mode separately determines priorities of tasks based on affinities, and then assigns priorities to tasks having the same affinity according to their amounts of required resources. The second scheduling mode separately determines priorities of tasks according to their amounts of required resources, and then assigns priorities to tasks having the same amount of required resources based on the affinities.

With reference to the accompanying drawings, a detailed description will now be made of the embodiments of the present invention.

A. Structure of Wireless Network

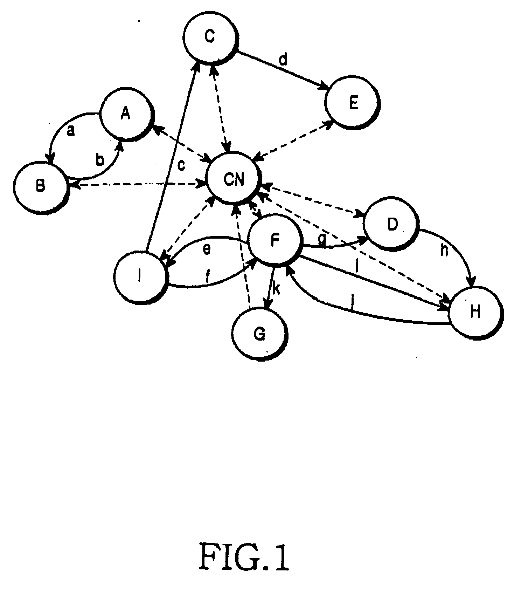

FIG. 1 is a diagram illustrating a wireless network supporting communication between nodes, to which embodiments of the present invention are applied. It is assumed in FIG. 1 that there are nine (9) nodes and eleven (11) tasks. Preferably, at least one CN should be provided. One of the nodes in the wireless network can be designated as the CN, or a separate CN can be provided for the CN. When one of the nodes is designated as a CN, an ad-hoc CN can be elected from the nodes for tasks. It will be assumed herein that when there is no CN in the wireless network, an ad-hoc CN is elected every superframe (or beacon interval).

In FIG. 1, nodes are identified with alphabetic uppercase letters A, B, C, D, E, F, G, H and I, and tasks are identified with alphabetic lowercase letters a, b, c, d, e, f, g, h, i, j and k. Connections between tasks are denoted by solid lines, and connections between a CN and respective nodes are denoted by dotted lines. The connections between tasks, denoted by solid lines, have an arrow on only one end thereof. This is to distinguish between a source node (with no arrow) and a destination node (with an arrow), which are connected to each other for one task.

Referring to FIG. 1, a task 'a' uses a node A as a source node and a node B as a destination node, and a task 'b' uses the node B as a source node and the node A as a destination node. A task 'c' uses a node I as a source node and a node C as a destination node, and a task 'd' uses the node C as a source node and a node E as a destination node. A task 'e' uses a node F as a source node and the node I as a destination node, and a task 'f' uses the node I as a source node and the node F as a destination node. A task 'g' uses the node F as a source node and a node D as a destination node. A task 'h' uses the node D as a source node and a node H as a destination node. A task 'i' uses the node F as a source node and the node H as a destination node, and a task 'j' uses the node H as a source node and the node F as a destination node. Finally, a task 'k' uses the node F as a source node and a node G as a destination node.

B. First Embodiment (Task Affinities Measured by CN)

With reference to the accompanying drawings, a description will now be made of a detailed operation performed according to a first embodiment of the present invention. In the first embodiment, a CN receives resource request messages transmitted from all nodes, and separately calculates affinities of tasks using the resource request messages.

B-1. Operation of Node

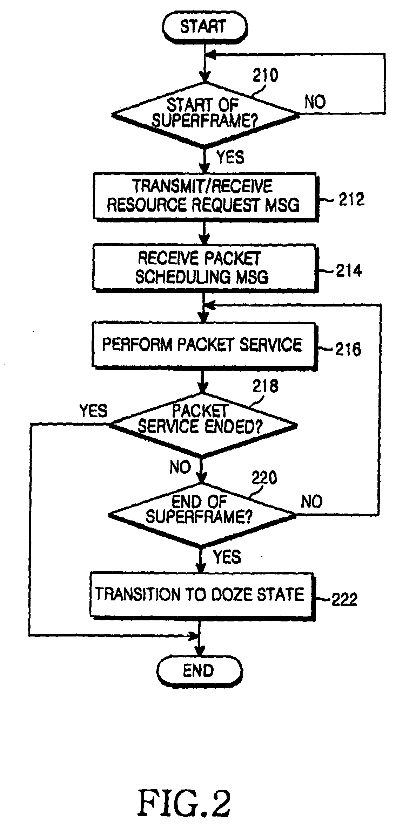

FIG. 2 is a diagram illustrating a control flow performed by a node according to the first embodiment of the present invention. Referring to FIG. 2, in step 210, a node determines whether a start time of a superframe has arrived. Generally speaking, in a wireless network supporting communication between nodes, the nodes perform communication for an interval of one superframe, and transition to a doze state in the other intervals, minimizing power consumption. At the start time of the superframe, all of the nodes in the wireless network wake up.

If there is packet data to transmit, the node transmits, in step 212, a resource request message to a CN, and to a counterpart node that will receive the packet data. The resource request message includes information on at least the desired communication service, i.e., its desired task, and information on the amount of resources required for performing each task. The task information includes information indicating whether the node itself serves as a source node or a destination node for the task. The required-resource amount information can indicate the length of packet data to be transmitted. Further, in step 212, the node receives resource request messages from other nodes. The node receives an acknowledgement (ACK) message from a counterpart node in response to its resource request message transmitted, and transmits an ACK message in response to a received resource request message. Upon failure to receive the ACK message, the node attempts retransmission of the corresponding resource request message.

Thereafter, in step 214, the node receives a packet scheduling message from the CN. Based on this message, the node determines a time at which it will perform at least one of its desired tasks. When the time arrives, the node performs a packet service for the corresponding task in step 216. If the packet service is completed, the node determines whether packet service for all of its desired tasks has ended, i.e., whether there are no more tasks to be performed, in step 218. If there are more tasks to be performed, the node determines in step 220 whether the superframe has ended. If the superframe has not ended, the node returns to step 216 where it performs the remaining packet service.

However, if the packet service for all tasks has ended or the superframe has ended, the node proceeds to step 222 where it transitions to a doze state to minimize power consumption. By doing so, even before the superframe ends, the node can transition to the doze state upon completion of the packet service, thereby preventing unnecessary power consumption.

In the foregoing description, the node operates on a per-superframe basis, by way of example. However, when the node does not operate on a per-superframe basis, the node can transition to the doze state after completely performing the packet service regardless of whether the superframe has ended or not.

B-2. Operation of CN

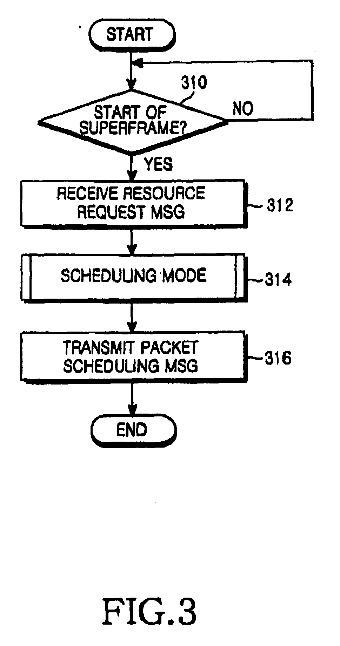

FIG. 3 is a diagram illustrating a control flow performed by a CN according to the first embodiment of the present invention. Referring to FIG. 3, in step 310, a CN determines whether a start time of a superframe has arrived. At the start time of the superframe, the CN wakes up together with the other nodes. In step 312, the CN receives resource request messages from the nodes. Based on this message, the CN determines tasks and the amount of resources requested by the respective nodes. In step 312, the CN can transmit its resource request message. The CN removes a resource request message, in response to which no ACK message is received, from the received resource request messages.

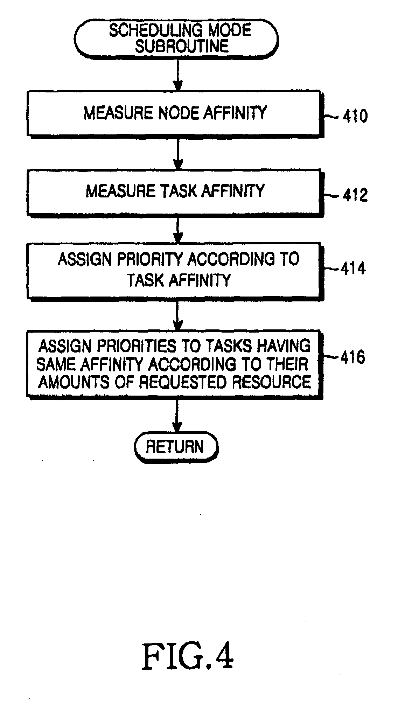

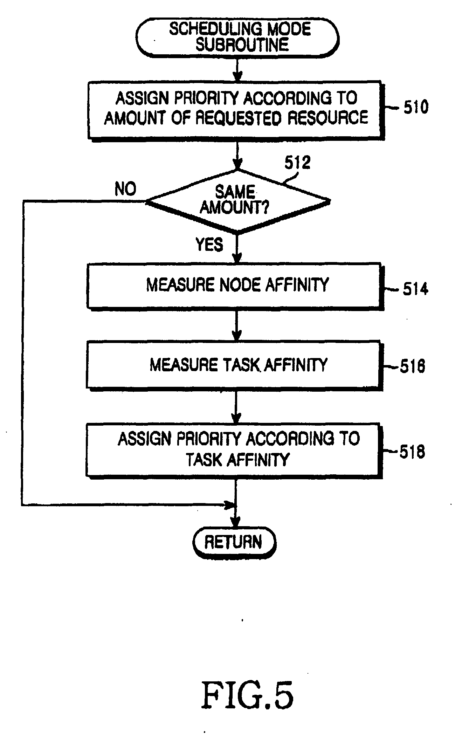

After a completed exchange of the resource request messages and their associated ACK messages, the CN performs a scheduling mode for separately assigning priorities to respective tasks based on the received resource request messages in step 314. An operation of the scheduling mode will be described in detail below with reference to FIGs. 4 and 5. In step 316, the CN creates a packet scheduling message including information on the priorities separately determined for the tasks in the scheduling mode, and transmits the created packet scheduling message to the nodes.

FIG. 4 is a diagram illustrating an example of a control flow for a subroutine of the scheduling mode illustrated in FIG. 3. Referring to FIG. 4, in step 410, the CN separately measures affinities of nodes. Here, an affinity of each node can be defined as the number of tasks to be performed by the corresponding node. For example, in FIG. 1, an affinity of the node A is 2 (tasks 'a' and 'b'), and an affinity of the node F is 6 (tasks 'e', 'f', 'g', 'i', 'j' and 'k'). Also, affinities of the other nodes B, C, D, E, G, H and I can be acquired in the foregoing rule. A rule for acquiring an affinity $A^N_k$ of an $N^{th}$ node can be defined by Equation (1):

$$A^N_k = \sum_i^M \left[ \alpha \cdot U(N^S_i = k) + \beta \cdot U(N^D_i = k) \right]$$

.

where

$$U(x) = 1, \text{if } x \text{ is true;}$$
$$= 0, \text{otherwise,} \qquad \cdots \cdots \cdots (1)$$

and $N_i^S$ and $N_i^D$ are source and destination nodes of ith task

As defined in Equation (1), U(x)=1 if x is true and U(x)=0 if x is false. Therefore, $U(N_i^S)$ denotes an affinity for an ith task when an Nth node serves as a source node, and $U(N_i^D)$ denotes an affinity for an ith task when an Nth node serves as a destination node. The affinity for a particular task when a particular node serves as a source node or a destination node is determined as 1 or 0. For example, in FIG. 1, when the node A serves as a source node, an affinity for a task 'a' is determined as 1, and when the node A serves as a destination node, an affinity for a task 'b' is determined as 1. Affinities for all other tasks are determined to be 0.

According to Equation (1), for more elaborate setup of the affinities, different weights are assigned for packet transmission and packet reception. For example, a higher weight is assigned for packet transmission, and a lower weight is assigned for packet reception. In Equation (1), $\alpha$ denotes a weight assigned for a source node, and $\beta$ denotes a weight assigned for a destination mode. However, when the weights are not used, the weights $\alpha$ and $\beta$ are set to 1. In addition, M can be defined as the total number of nodes or the total number of tasks, used for acquiring affinities.

Affinities of respective nodes in FIG. 1, acquired in accordance with Equation (1), can be expressed as in Table 1.

Table 1

| Node | $A_N$ (Node Affinity) |
|------|------------------------|
| A | 2 |
| B | 2 |
| C | 2 |
| D | 2 |
| E | 1 |
| F | 6 |
| G | 1 |
| H | 3 |
| 1 | 3 |

As another example, each of the node affinities can be acquired taking into account a size of a task, i.e., a size of a data packet. Equation (2) below defines a rule for acquiring each of the node affinities $A_k^{na}$ (indicating an affinity of a kth node (or mobile terminal), when the task size (or size of packet data) in Equation (1) is additionally taken into consideration.

$$A_k^{na} = \sum_i^M S_k \cdot \left[ \alpha \cdot U(N_i^S = k) + \beta \cdot U(N_i^D = k) \right] \qquad \cdots \cdots \cdots (2)$$

where $S_k$ denotes a size of a task for a kth node.

After separately acquiring affinities of the nodes, the CN measures an affinity $A_i^T$ of an ith task using the acquired node affinities in step 412. The task affinity is measured separately for all of the tasks in the wireless network. The task affinity is calculated as the sum of an affinity $A_{src}^N$ of a source node and an affinity $A_{dst}^N$ of a destination node, constituting the corresponding task. This is defined by Equation (3):

$$A_i^T = \tau \cdot A_{src}^N + \delta \cdot A_{dst}^N$$

$A_i^T$ is task affinity of $i$th task;

$A_{src}^N, A_{dst}^N$ is node affinity of source and destination nodes;

$\tau$ and $\delta$ is weight factor determined by node QoS demand or battery status

In Equation (3), it is assumed that a weight $\tau$ or a weight $\delta$ is assigned according to whether a corresponding node serves as a source node or a destination node. The weight $\tau$ is assigned when a node serves as a source node for a particular task, and the weight $\delta$ is assigned when a node serves as a destination node for a particular task. Here, a higher weight can be assigned for a source node. However, when the weights are not used, the weights $\tau$ and $\delta$ are set to 1.

Affinities of respective tasks in FIG. 1, acquired in accordance with Equation (3), can be expressed as in Table 2.

Table 2

| Task | $A_{src}^N$ | $A_{dst}^N$ | $A_i^T$ |
|---|---|---|---|
| a | 2 | 2 | 4 |

| b | 2 | 2 | 4 |
|---|---|---|---|
| c | 3 | 2 | 5 |
| d | 2 | 1 | 3 |
| e | 6 | 3 | 9 |
| f | 3 | 6 | 9 |
| g | 6 | 2 | 8 |
| h | 2 | 3 | 5 |
| i | 6 | 3 | 9 |
| j | 3 | 6 | 9 |
| k | 6 | 1 | 7 |

After separately measuring affinities of the tasks, the CN separately assigns priorities to respective tasks based on the measured task affinities in step 414. To that end, the CN reorders the task affinities by level. For example, the CN can reorder the task affinities from lowest task affinity to highest. The reordering result of the task affinities is illustrated in Table 3.

Table 3

| Task | $A_i^T$ | Priority |
|---|---|---|
| d | 3 | 1 |
| a | 4 | 2 |
| b | 4 | 2 |
| c | 5 | 3 |
| h | 5 | 3 |
| k | 7 | 4 |
| g | 8 | 5 |
| e | 9 | 6 |

Table continued

| Task | $A^T_i$ | Priority |
|------|---------|----------|
| f | 9 | 6 |
| i | 9 | 6 |
| j | 9 | 6 |

Referring to Table 3, it can be understood that priorities are assigned in the order of low task affinity. As a result, a top priority is assigned for a task 'd'. The rule for assigning priorities in the order of low task affinity can be normalized by Equation (4):

$$Q(\overline{A}) = \arg\min_i A_i^T \qquad \ldots\ldots\ldots (4)$$

where $\overline{A}$ is a given affinity set.

In Equation (4), *i* denotes an index indicating a task. When only the task affinities are taken into consideration, the transmission order (i.e., priority) is determined as (d) → (a,b) → (c,h) → (k) →(g) → (e,f,i,j).

As illustrated in Table 3, there are tasks (for example, tasks 'a' and 'b') having the same task affinity (or the same priority). In this case, the CN needs to assign different priorities to the tasks with the same task affinity. Therefore, in step 416, the CN assigns priorities to the tasks having the same task affinity according to their required resources. The amount of required resources can be replaced with a packet length for the packet transmitted through the corresponding task, or, a transmission time interval of the packet. The amount $T_i$ of required resources can be calculated by a packet length $L_i$ and a data rate $R_i$ as shown in Equation (5):

$$T_i = \frac{L_i}{R_i} \qquad \ldots\ldots\ldots (5)$$

where the amount of required resources is assumed to be a transmission time interval of a packet.

However, when the data rate is not designated, a basic data rate or an average data rate supported in the wireless network is assumed to be the data rate. For example, when scheduling is performed by an ad-hoc CN, the basic data rate is used, and when scheduling is performed by a fixed CN, the average data rate is used.

The amount of required resources (i.e., a length of a transmission packet or a transmission time interval of a packet) acquired for each task is illustrated in Table 4.

Table 4

| Task | Amount of Required Resources |
|------|------------------------------|
| a | 5 |
| b | 10 |
| c | 15 |
| d | 5 |
| e | 10 |
| f | 15 |
| g | 5 |
| h | 10 |
| i | 15 |

Table continued

| Task | Amount of Required Resources |
|---|---|
| j | 5 |
| k | 10 |

In Table 4, the CN assigns different priorities to the tasks having the same task affinity according to their required resources with tasks having smaller amounts of required resources being assigned the higher priorities. Such a rule can be normalized by Equation (6):

$$Q(\vec{A}) = \arg\min_l \Phi(T_l), \text{ s.t. } l \in \Psi,$$

where $\Psi$ is the largest set of $i^* = \arg\min A_i^T$;

$T_l$ is $l$th task; $\Phi(T_l)$ is the smaller affinity value
of source and destination nodes

Finally, the CN can separately assign priorities to the respective tasks as shown in Table 5, considering the required resources for the tasks having the same task affinity.

Table 5

| Task | $A^T_i$ | Amount of Required Resources | Priority |
|---|---|---|---|
| d | 3 | 5 | 1 |
| a | 4 | 5 | 2 |
| b | 4 | 10 | 3 |
| h | 5 | 10 | 4 |
| c | 5 | 15 | 5 |
| k | 7 | 10 | 6 |
| g | 8 | 5 | 7 |
| j | 9 | 5 | 8 |
| e | 9 | 10 | 9 |
| f | 9 | 15 | 10 |
| i | 9 | 15 | 11 |

In Table 5, there are tasks (tasks 'f' and 'i') having the same amount of required resources among the tasks having the same task affinity. In this case, the CN can assign priorities at its discretion.

FIG. 5 is a diagram illustrating another example of a control flow for a subroutine of the scheduling mode illustrated in FIG. 3. Referring to FIG. 5, in step 510, the CN separately assigns priorities to the tasks according to the amounts of their required resources. Again, the amount of required resources can be replaced with thea length of a packet transmitted through the corresponding task or a transmission time interval of the packet. The amount $T_i$ of required resources can be calculated by a packet length $L_i$ and a data rate $R_i$ in accordance with Equation (5). However, when the data rate is not designated, a basic data rate or an average data rate supported in a wireless network is assumed to be the data rate. For example, when scheduling is performed by an ad-hoc CN, the basic data rate is used, and when scheduling is performed by a fixed CN, the average data rate is used. The amount of required resources (i.e., a length of a transmission packet or a transmission time interval of a packet) acquired for each task is illustrated in Table 4.

The CN assigns priorities to the tasks according to their amounts of required resources as illustrated in Table 4. That is, a task requiring less resources is assigned a higher priority. Such a rule can be normalized by Equation (6).

The CN can separately assign priorities to the respective tasks considering their amounts of required resources as shown in Table 6.

Table 6

| Task | Amount of Required Resources | Priority |
|---|---|---|
| a | 5 | 1 |
| d | 5 | 1 |
| g | 5 | 1 |
| j | 5 | 1 |
| b | 10 | 2 |
| e | 10 | 2 |
| h | 10 | 2 |
| k | 10 | 2 |
| c | 15 | 3 |
| f | 15 | 3 |
| i | 15 | 3 |

In step 512, the CN determines whether there are tasks having the same amount of required resources. In Table 6, there are tasks having the same amount of required resources. That is, the tasks 'a', 'd', 'g' and 'j' have the same amount '5' of required resources, and the tasks 'b', 'e', 'h' and 'k' have the same amount '10' of required resources. Also, the tasks 'c', 'f' and 'i' have the same amount '15' of required resources. In this case, the CN assigns different priorities to the tasks having the same amount of required resources.

Therefore, in step 514, the CN separately measures node affinities. After that, the CN measures an affinity $A^T_i$ of an $i^{th}$ task using the acquired node affinities in step 516. Measurement on the node and task affinities using the measured node affinities are done in accordance with the method described above. The task affinities measured by the CN are illustrated in Table 2.

In step 518, the CN assigns priorities to the tasks having the same amount of required resources by considering the task affinities. Finally, the CN separately assigns priorities to the respective tasks as shown in Table 7, considering task affinities for the tasks with the same amount of required resources.

Table 7

| Task | Amount of Required Resources | $A^T_i$ | Priority |
|---|---|---|---|
| d | 5 | 3 | 1 |
| a | 5 | 4 | 2 |
| g | 5 | 8 | 3 |
| j | 5 | 9 | 4 |
| b | 10 | 4 | 5 |
| h | 10 | 5 | 6 |
| k | 10 | 7 | 7 |
| e | 10 | 9 | 8 |
| c | 15 | 5 | 9 |
| f | 15 | 9 | 10 |
| i | 15 | 9 | 11 |

In Table 5, there are tasks (tasks 'f' and 'i') with the same amount of required resources. In this case, the CN can assign priorities at its discretion.

C. Second Embodiment (Task Affinities Measured by Node)

With reference to the accompanying drawings, a description will now be made of a detailed operation performed according to a second embodiment of the present invention. In the second embodiment, a node calculates task affinity for at least one of its desired tasks and reports the calculated task affinity to a CN, so that the CN can assign priorities to all tasks in a wireless network.

C-1. Operation of Node

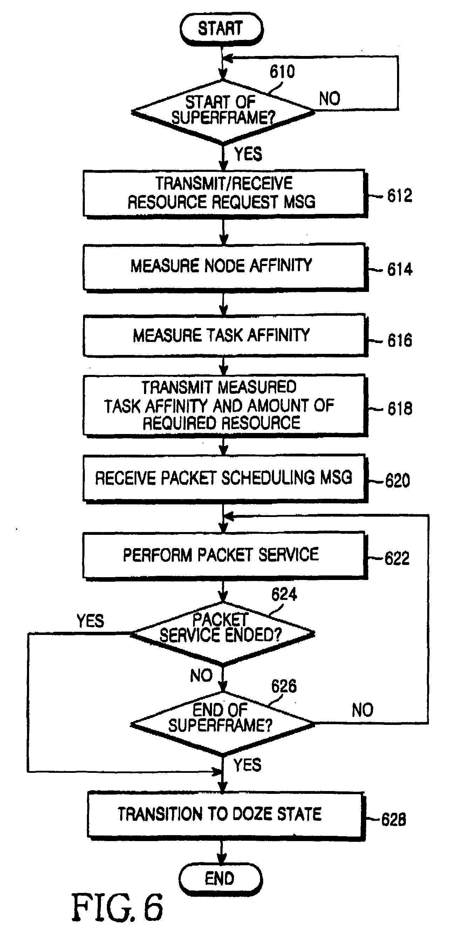

FIG. 6 is a diagram illustrating a control flow performed by a node according to the second embodiment of the present invention. Referring to FIG. 6, in step 610, a node determines whether a superframe start time has arrived. Generally, in a wireless network supporting communication between nodes, the nodes communicate for an interval of one superframe, and transition to a doze state in the other intervals, minimizing power consumption. Therefore, at the start time of the superframe, all of the nodes in the wireless network wake up.

If there is packet data to transmit, the node transmits, in step 612, a resource request message to a counterpart node that will receive the packet data. The resource request message includes information on at least one of its desired communication service, i.e., its desired task. The task information includes information indicating whether the node itself serves as a source node or a destination node for the task. Further, in step 612, the node receives resource request messages from other nodes. The node receives an acknowledgement (ACK) message from a counterpart node in response to its resource request message transmitted, and transmits an ACK message in response to a received resource request message. If the ACK message is not received, the node attempts retransmission of the corresponding resource request message.

Thereafter, in step 614, the node measures its own node affinity. Herein, the node affinity can be defined as the number of tasks to be performed by the corresponding node. For example, in FIG 1, the affinity of node A is 2 (tasks 'a' and 'b'), and the affinity of node F is 6 (tasks 'e', 'f', 'g', 'i', 'j' and 'k'). Also, affinities of the other nodes B, C, D, E, G, H and I can be acquired by the foregoing rule. The rule for acquiring an affinity $A^N_k$ of an $N^{th}$ node can be defined as Equation (1).

After acquiring its own node affinity, the node proceeds to step 616 where it measures an affinity $A^T_i$; of an $i^{th}$ task to be performed by the node itself. The measurement on task affinity is separately performed on the tasks required for communication between the nodes in the network. The task affinity is calculated as the sum of an affinity $A^N_{src}$ of a source node and an affinity $A^N_{dst}$ of a destination node, constituting the corresponding task. This is defined as Equation (3).

In step 618, the node transmits the measured task affinity and information on the amount of resources required for performing the corresponding task to a CN. The required-resource amount information may include the length of packet data to be transmitted.

In step 620, the node receives a packet scheduling message from the CN. Based on the packet scheduling message, the node determines a time at which it will perform at least one of its desired task. When the determined time arrives, the node performs packet service for the corresponding task in step 622. Once the packet service is done, the node determines whether packet service for all of its desired tasks has been done, i.e., determines whether there are no more tasks to be performed, in step 624. If there are more tasks to be performed, the node determines whether the superframe has ended in step 626. If the superframe has not ended, the node returns to step 622 where it performs the remaining packet service.

However, if packet service for all of the desired tasks has ended, or the superframe has ended, the node proceeds to step 628 where it transitions to a doze state to minimize power consumption. By doing so, the node can transition to the doze state upon completion of the packet service, even before the superframe ends, to prevent unnecessary power consumption.

In the foregoing description, the node operates on a per-superframe basis to provide an example. However, when the node does not operate on a per-superframe basis, the node can transition to the doze state after packet service is completed regardless of whether the superframe has ended or not.

C-2. Operation of CN

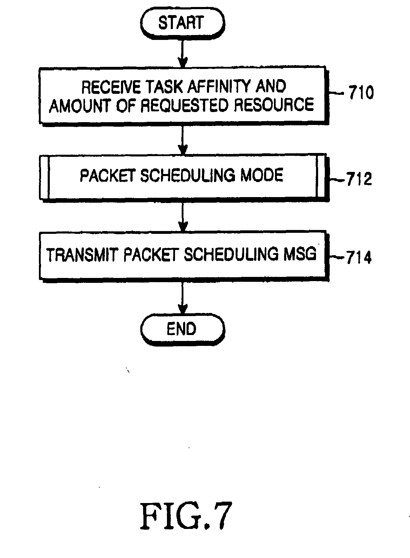

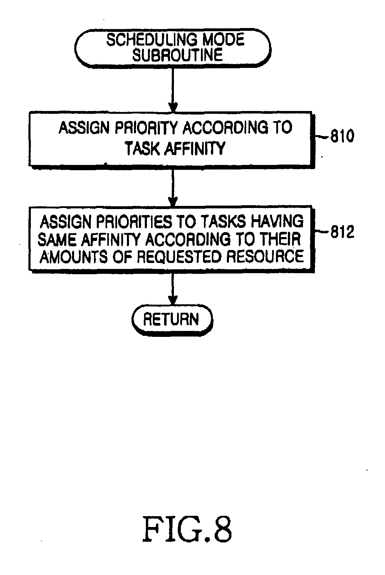

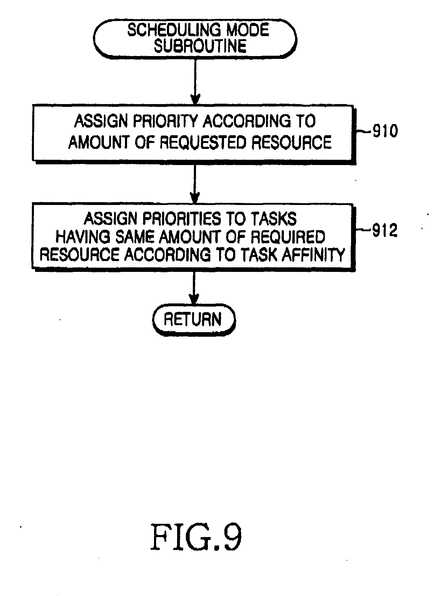

FIG. 7 is a diagram illustrating control flow performed by a CN according to the second embodiment. Referring to FIG. 7 a CN receives task affinities and the amounts of required resources from the nodes in the wireless network in step 710. In step 712, the CN performs scheduling for separately assigning priorities to respective tasks based on task affinities and required resources. The scheduling will be described in detail with reference to FIGs. 8 and 9. In step 714, the CN creates a packet scheduling message including information on the priorities separately determined for the tasks in the scheduling mode, and transmits the created packet scheduling message to the nodes.

FIG. 8 is a diagram illustrating an example of a control flow for a subroutine of the scheduling mode illustrated in FIG. 7. Referring to FIG. 8, in step 810, the CN separately assigns priorities to respective tasks based on the task affinities reported from the nodes. It is assumed that the task affinities are as shown in Table 2. To separately assign priorities to the tasks, the CN reorders task affinities in order of level. The reordering result of the task affinities is illustrated in Table 3.

Thereafter, in step 812, the CN assigns different priorities to the tasks (for example, tasks 'a' and 'b') having the same task affinity. Herein, the CN assigns priorities to the tasks having the same task affinity according to their required resources. That is, when tasks have the same affinity, the task with the smaller amount of required resources is assigned a higher priority. The amount of required resources for each task is illustrated in Table 4. The amount of required resources can be replaced with the length of a packet transmitted through the corresponding task, or, a transmission time interval of the packet.

When a data rate is not designated as the required-resource amount information, a basic data rate or an average data rate of the wireless network is assumed to be the data rate. For example, when scheduling is performed by an ad-hoc CN, the basic data rate is used, and when scheduling is performed by a fixed CN, the average data rate is used.

Finally, the CN can separately assign priorities to the respective tasks as shown in Table 5, considering the required resources for tasks with the same affinity.

Although the foregoing description is restricted to the case where there are tasks having the same affinity, if there are no such tasks, the CN can skip the process of assigning priorities according to the amount of required resources.

FIG. 9 is a diagram illustrating another example of a control flow for a subroutine of the scheduling mode illustrated in FIG. 7. Referring to FIG. 9, in step 910, the CN assigns priorities to the tasks according to their amounts of required resources. Again, the amount of required resources can be replaced with the length of a packet transmitted through the corresponding task, or, a transmission time interval of the packet.

The amount $T_i$ of required resources can be calculated by a packet length $L_i$ and a data rate $R_i$ in accordance with Equation (5). As mentioned previously, when the data rate is not designated, a basic data rate or an average data rate of the wireless network is assumed to be the data rate. For example, when scheduling is performed by an ad-hoc CN, the basic data rate is used, and when scheduling is performed by a fixed CN, the average data rate is used. The amount of required resources (i.e., a length of a transmission packet or a transmission time interval of a packet) acquired for each task is illustrated in Table 4.

The CN assigns priorities to the tasks according to required resources, as illustrated in Table 4. That is, tasks requiring less resources are assigned higher priorities. Such a rule can be normalized by Equation (6). The CN can separately assign priorities to the respective tasks considering required resources as shown in Table 6.

If tasks require the same amount of resources, the CN assigns priorities to those tasks in step 912 while considering the task affinities reported from the nodes, which are illustrated in Table 2. To assign priorities separately to the tasks with the same amount of required resources, the CN reorders the task affinities of the corresponding tasks by level. The CN assigns priorities to the tasks having the same amount of required resources by affinity level. Finally, the CN can separately assign priorities to the respective tasks as shown in Table 7.

D. Simulation Result

With reference to the accompanying drawings, a detailed description will now be made of simulation results on the embodiments of the present invention. Here, it is assumed that all nodes can access each other and a length of a packet for exchange between nodes is randomly determined. In addition, it is assumed that when nodes are randomly designated, the entire data load in a wireless network is uniformly distributed to the nodes.

Table 8 illustrates power consumption according to a state (doze mode, transmit mode, receive mode, monitor mode) of a node.

Table 8

| Mode | Doze | Transmit | Receive | Monitor |
|---|---|---|---|---|
| Power consumption (mW) | 60 | 1400 | 950 | 805 |

As can be understood from Table 8, nodes have greatest power consumption in a transmit mode, and smallest power consumption in a doze mode.

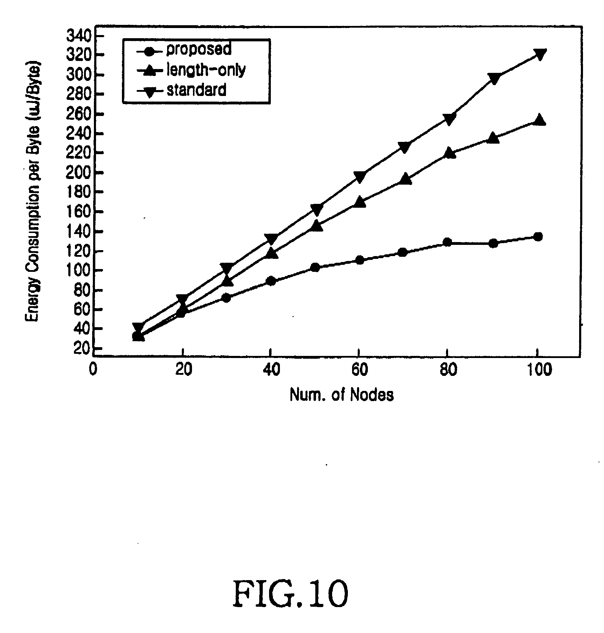

FIG. 10 is a diagram illustrating a relationship between the number of nodes and power consumption for transmission of unit data in a wireless network. In FIG. 10, the horizontal axis denotes the number of nodes that can access each other, and the vertical axis denotes power consumption for transmission of one byte.

I Referring to FIG. 10, the existing competition scheme ("standard") has the greatest power consumption, and the existing packet length-based scheme ("length-only") has the next greatest power consumption. Compared with the prior art schemes, the embodiment ("proposed") of the present invention shows a maximum of about 58% reduction in power consumption, and shows about 30% reduction in power consumption when the number of nodes is 30.

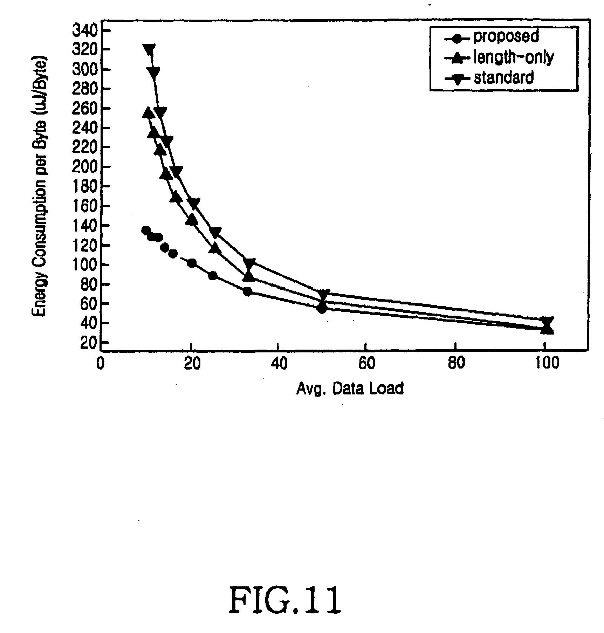

FIG. 11 is a diagram illustrating a relationship between power consumption (y-axis) and data load (x-axis) in a wireless network. Here, power consumed when a total of 500 data packets are exchanged in a given wireless network is expressed as throughput. Further, the data packet size is assumed to be random, and a data load is calculated by normalizing the size of the packet data with the number of nodes participating in communication. An increase in data load refers to an increase in the number of data packets transmitted per node.

Referring to FIG. 11, the standard scheme has the greatest power consumption per unit transmission and the proposed scheme has the smallest power consumption per unit transmission. Power consumption is decreased with increased data load per node because if there are fewer nodes, there are less nodes to monitor. Transmitting/receiving many data packets by fewer nodes is more efficient than transmitting/receiving fewer data packets by many nodes.

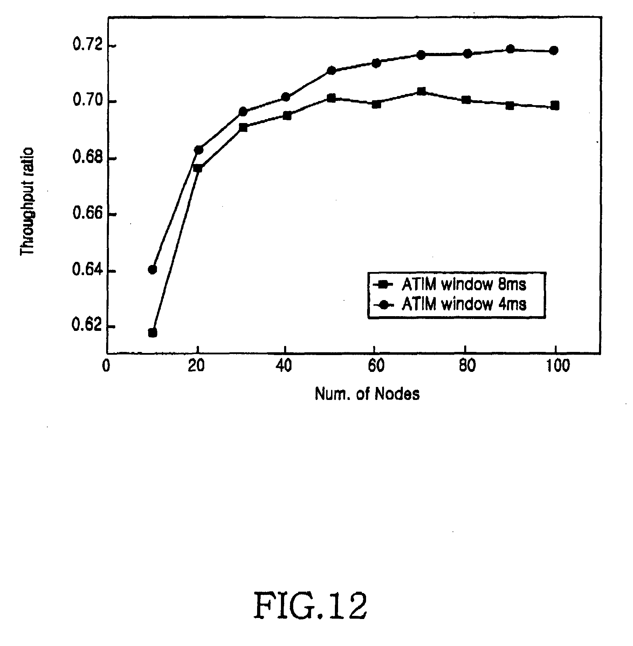

FIG. 12 is a graph illustrating a comparison between throughput of the competition scheme and throughput of an embodiment of the present invention in a wireless network. In FIG. 12, the horizontal axis denotes the number of nodes in a wireless network, and the vertical axis denotes throughput. The throughput represents a ratio determined when throughput of the embodiment of the present invention is assumed to be 100%. Here, the size of an ATIM window is assumed to be 8ms and 4ms.

Referring to FIG. 12, throughput is improved when the ATIM window is 4ms. However, regardless of the number of nodes, the competition scheme is lower than the embodiment of the present invention in terms of the throughput. When the ATIM window is 8ms, throughput according to an embodiment of the present invention is improved by a maximum of about 62%, and by an average of about 42%. In addition, when the ATIM window is 4ms, throughput according to an embodiment of the present invention is improved by a maximum of about 52%, and by an average of about 40%. The reason why the throughput is stabilized beginning at a point where the number of nodes is 30 or larger is because after primary competition, only a constant number of nodes wake up to transmit packets.

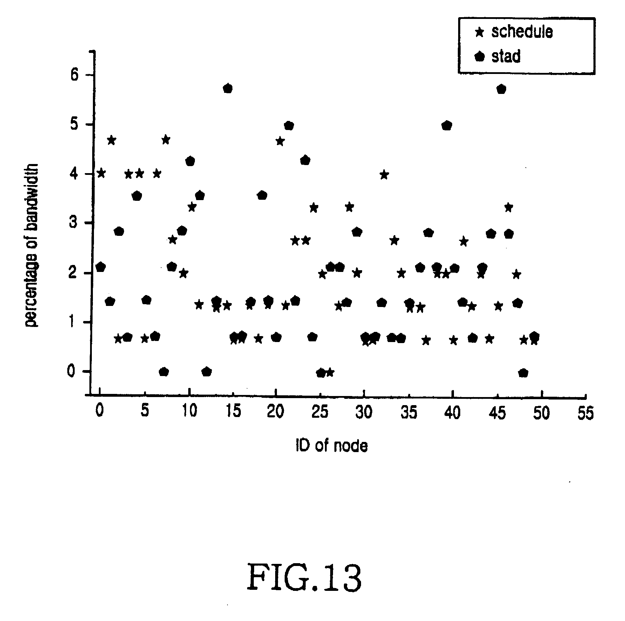

FIG. 13 is a diagram illustrating a comparison between an embodiment of the present invention and the existing power-saving scheme in terms of service acquisition rate for each node. That is, FIG. 13 illustrates a fairness comparison between the present invention and the existing power-saving scheme. In FIG. 13, the horizontal axis denotes identifiers (IDs) of modes participating in packet transmission/reception, and the vertical axis denotes a level of a service that the nodes receive. Therefore, as the points are scattered wider, the fairness is decreased lower.

Referring to FIG. 13, the points denoted by the embodiment of the present invention is similar to the points denoted by the existing scheme in terms of distribution, but the points denoted by the existing scheme are distributed wider. Fairness can be calculated by Equation (7):

$$f = \frac{(\sum_{i=1}^{n} x)^2}{n \bullet \sum_{i=1}^{n} x^2} \qquad \ldots (7)$$

When fairness is calculated by Equation (7), the present invention shows performance improvement of about 7% as compared with the existing scheme.

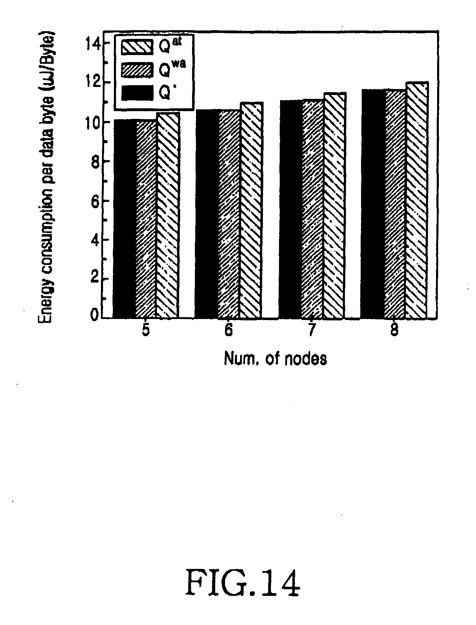

FIG. 14 is a diagram illustrating a performance comparison between node affinities $Q^{at}$ acquired taking a task size into account and node affinities $Q^{wa}$ acquired taking a task size into no account.

It can be noted from FIG. 14 that node affinities $Q^{at}$ acquired taking a task size into account approximate optimal performance $Q^*$. That is, the node affinities $Q^{at}$ acquired taking the task size into account are supper in performance to the node affinities $Q^{wa}$ acquired taking the task size into no account.

As described above, the present invention assigns priorities according to affinities independently given to tasks, and assigns priorities to the tasks having the same affinity according to their amounts of required resources. Therefore, the present invention has the following advantages.

First, throughput of data communication is high, so users can receive high-capacity services.

Second, power consumption of nodes decreases, contributing to an increase in maintenance time of the wireless network supporting communication between the nodes.

Third, service providers can provide high-capacity, low-power services.

While the invention has been shown and described with reference to a certain preferred embodiment thereof, it will be understood by those skilled in the art that various changes in form and details may be made therein without departing from the scope of the invention as defined by the appended claims.

**Claims**

1. A method for performing scheduling on tasks formed for communication between a plurality of nodes in a wireless network supporting communication between the nodes, the method comprising the steps of:

   calculating affinities for the nodes;
   calculating affinities for the tasks according to the calculated node affinities; and
   assigning priorities to the tasks in the order of level of the calculated task affinities.

2. The method of claim 1, wherein the scheduling of said tasks is performed by a coordinator in the wireless network in which the tasks are formed for said communication between the plurality of nodes and the nodes transmit information on the tasks.

3. The method of claim 2, wherein the method further comprises:

   receiving information on the tasks from the nodes; and
   transmitting the assigned priorities to the nodes,

   wherein said step of calculating the affinities for the nodes is performed according to the task information.

4. The method of claim 1 or 3, wherein each of the node affinities is the number of tasks formed by a corresponding node.

5. The method of claim 1 or 3, wherein each of the node affinities is the product of the number of tasks formed by a corresponding node and a task size.

6. The method of one of claims 1 to 5, wherein each of the task affinities is the sum of an affinity of a source node and an affinity of a destination node forming a corresponding task.

7. The method of one of claims 1 to 6, further comprising assigning priorities to tasks having the same affinity according to their amounts of required resources.

8. The method of one of claims 1 to 7, wherein the priority assigning step comprises assigning a higher priority to a lower-affinity task.

9. The method of one of claims 1 to 8, wherein the priority assigning step comprises assigning a higher priority to a task having the smaller amount of required resources among the tasks having the same affinity.

10. The method of claim 3 further comprising:

    assigning priorities to the tasks according to their amounts of required resources, acquired from the task information;
    if there are tasks having the same amount of required resources, calculating said affinities for the nodes that form the tasks having the same amount of required resources according to the task information,

    wherein said tasks have the same amount of required resources.

11. The method of claim 10, wherein each of the node affinities is the number of tasks formed by a corresponding node.

12. The method of claim 10, wherein each of the node affinities is the product of the number of tasks formed by a corresponding node and a task size.

13. The method of claim 10 or 12, wherein each of the task affinities is the sum of an affinity of a source node and an affinity of a destination mode forming a corresponding task.

14. The method of one of claims 10 to 13, wherein the priority assigning step comprises assigning a higher priority to a task having the smaller amount of required resource.

15. The method of claim 14, wherein the priority assigning step comprises assigning a higher priority to a lower-affinity task among the tasks having the same amount of required resources.

16. A method for performing scheduling on tasks formed for communication between a plurality of nodes in a wireless network having the nodes and a coordinator for coordinating communication between the nodes, the method comprising:

    calculating an affinity for at least one task in which the corresponding node participates, and transmitting the calculated task affinity to the coordinator;
    assigning priorities to the tasks in the order of level of the task affinities received from the nodes; and
    transmitting the assigned priorities to the nodes.

17. The method of claim 16, wherein each of the task affinities is calculated as the sum of an affinity of a source node and an affinity of a destination node forming a corresponding task, and the affinities of the source node and the destination node are calculated by the number of formed tasks.

18. The method of claim 16 or 17, wherein the priority assigning step comprises assigning a higher priority to a lower-affinity task.

19. The method of claim 18, further comprising assigning priorities to tasks having the same affinity according to their amounts of required resources.

20. The method of claim 19, wherein the priority assigning step comprises assigning a higher priority to a task having the smaller amount of required resources among the tasks having the same affinity.

21. An apparatus for performing scheduling on tasks formed for communication between a plurality of nodes in a wireless network supporting communication between the nodes, wherein said apparatus is adapted to operate according to one of claims 1 to 20.

FIG.1

START

210

START OF
SUPERFRAME?    NO

YES

TRANSMIT/RECEIVE
RESOURCE REQUEST MSG — 212

RECEIVE PACKET
SCHEDULING MSG — 214

PERFORM PACKET SERVICE — 216

218

YES    PACKET
SERVICE ENDED?

NO

220

END OF
SUPERFRAME?    NO

YES

TRANSITION TO DOZE STATE — 222

END

FIG.2

EP 1 672 852 A2

FIG.3

18

```
        ┌─────────────────────┐
        │   SCHEDULING MODE    │
        │     SUBROUTINE       │
        └─────────────────────┘
                  │
                  ▼
    ┌───────────────────────────┐
    │   MEASURE NODE AFFINITY    │ ── 410
    └───────────────────────────┘
                  │
                  ▼
    ┌───────────────────────────┐
    │   MEASURE TASK AFFINITY    │ ── 412
    └───────────────────────────┘
                  │
                  ▼
    ┌───────────────────────────┐
    │  ASSIGN PRIORITY ACCORDING │
    │       TO TASK AFFINITY     │ ── 414
    └───────────────────────────┘
                  │
                  ▼
    ┌───────────────────────────────┐
    │ ASSIGN PRIORITIES TO TASKS     │
    │ HAVING SAME AFFINITY ACCORDING │ ── 416
    │ TO THEIR AMOUNTS OF REQUESTED  │
    │ RESOURCE                       │
    └───────────────────────────────┘
                  │
                  ▼
            ┌──────────┐
            │  RETURN  │
            └──────────┘
```

# FIG.4

FIG.5

START

610
START OF
SUPERFRAME? — NO

YES

TRANSMIT/RECEIVE
RESOURCE REQUEST MSG — 612

MEASURE NODE AFFINITY — 614

MEASURE TASK AFFINITY — 616

TRANSMIT MEASURED
TASK AFFINITY AND AMOUNT OF — 618
REQUIRED RESOURCE

RECEIVE PACKET SCHEDULING MSG — 620

PERFORM PACKET SERVICE — 622

624
YES — PACKET
SERVICE ENDED?

NO

626
END OF — NO
SUPERFRAME?

YES

TRANSITION TO DOZE STATE — 628

END

FIG. 6

START

RECEIVE TASK AFFINITY AND
AMOUNT OF REQUESTED RESOURCE ~710

PACKET SCHEDULING MODE ~712

TRANSMIT PACKET SCHEDULING MSG ~714

END

# FIG.7

SCHEDULING MODE
SUBROUTINE

ASSIGN PRIORITY ACCORDING TO
TASK AFFINITY ──810

ASSIGN PRIORITIES TO TASKS HAVING
SAME AFFINITY ACCORDING TO THEIR ──812
AMOUNTS OF REQUESTED RESOURCE

RETURN

FIG.8

```
        ┌─────────────────────────┐
        │    SCHEDULING MODE       │
        │      SUBROUTINE          │
        └─────────────────────────┘
                    │
                    ▼
   ┌──────────────────────────────────┐
   │  ASSIGN PRIORITY ACCORDING TO     │── 910
   │  AMOUNT OF REQUESTED RESOURCE     │
   └──────────────────────────────────┘
                    │
                    ▼
   ┌──────────────────────────────────┐
   │   ASSIGN PRIORITIES TO TASKS      │
   │  HAVING SAME AMOUNT OF REQUIRED   │── 912
   │ RESOURCE ACCORDING TO TASK AFFINITY│
   └──────────────────────────────────┘
                    │
                    ▼
             ┌────────────┐
             │   RETURN   │
             └────────────┘
```

# FIG.9

FIG.10

FIG.11

FIG.12

FIG.13

FIG.14